# EUROPEAN PATENT SPECIFICATION

(11) **EP 4 447 381 B1**
(45) Date of publication and mention of the grant of the patent: **17.12.2025**
(21) Application number: 24162546.6
(22) Date of filing: 11.03.2024
(51) Int. Cl.: H04L 9/08, H01L 23/00

(54) **PHYSICAL UNCLONABLE FUNCTION CODE GENERATING APPARATUS AND METHOD**
VORRICHTUNG UND VERFAHREN ZUR ERZEUGUNG EINES PHYSIKALISCHEN UNKLONBAREN FUNKTIONSCODES
APPAREIL ET PROCÉDÉ DE GÉNÉRATION DE CODE DE FONCTION PHYSIQUE INCLONABLE

(30) Priority: 27.03.2023 TW 112111585
(43) Date of publication of application: 16.10.2024
(73) Proprietor: Winbond Electronics Corp., Taichung City, Taiwan. (TW)
(72) Inventor: WU, Bo-Lun, Taichung City (TW); HSU, Po-Yen, Taichung City (TW); CHEN, Yi-Hsiu, Taichung City (TW)
(74) Representative: Becker, Eberhard

(56) References cited:
- US-A1- 2005 110 102
- US-A1- 2018 039 581
- US-A1- 2021 320 070

## Description

### BACKGROUND

### Technical Field

The disclosure relates to a code generating apparatus and a code generating method, particularly to a physical unclonable function code generating apparatus and a physical unclonable function code generating method.

### Description of Related Art

The physical changes that occur during the process are referred to as physical unclonable functions (PUFs). Since the physical changes during the process are random and unpredictable, the random codes generated based on PUFs have random and unique characteristics. Therefore, PUFs may be applied to a wide range of applications, such as element identity, security, and authentication.

In the conventional technology, modifying the programming of existing flash memory or erasing the parameters or methods used for operations of existing flash memory to amplify the random electronic noise generated by the thickness of the tunnel oxide layer determined by different production processes of flash memory has been known. However, existing flash memory has stable characteristics, and in order to amplify the random electronic noise in existing flash memory, the conventional technology needs to use complex circuits or processes to implement the modification of programming or the erasure of the parameters or methods used for operations, thereby not facilitating miniaturization and randomness.

Recently, with the increasing demand for generating random codes, the need for innovative designs to effectively generate PUF codes has also increased among operators in related application fields.

US2018/039581 discloses a system and method for utilizing a security key stored in non-volatile memory, and for generating a PUF-based data set on an integrated circuit including non-volatile memory cells.

### SUMMARY

The disclosure provides a physical unclonable function (PUF) code generating apparatus and a PUF code generating method, which can randomly generate PUF codes.

The PUF code generating apparatus of the disclosure includes a PUF code generating element and a PUF code storage element. The PUF code generating element is configured to generate a PUF code. The PUF code storage element is coupled to the PUF code generating element. The PUF code storage element is configured to receive and store the PUF code. The PUF code generating element includes multiple first memory cells. Each of the first memory cells includes a gate layer, a semiconductor layer, and a tunnel oxide layer. The tunnel oxide layer is located between the gate layer and the semiconductor layer. The tunnel oxide layer includes a central area and a peripheral area. A ratio of a minimum thickness of the peripheral area of the tunnel oxide layer to a maximum thickness of the central area of the tunnel oxide layer is defined as a corner ratio, and the corner ratio is less than 0.99.

The PUF code generating method of the disclosure is configured for a PUF code generating apparatus. The PUF code generating apparatus includes a PUF code generating element and a PUF code storage element. The PUF code generating method includes: a tunnel oxide layer of multiple first memory cells in the PUF code generating element is fabricated through a first process, a second process, or a third process so that a corner ratio of the first memory cells in the PUF code generating element is less than 0.99; the PUF code generating element is programmed as a first logic value, and through a data retention loss process, a part of bits of the PUF code generating element is made randomly change to a second logic value to generate a PUF code; and the PUF code is stored in the PUF code storage element. Each of the first memory cells includes a gate layer, a semiconductor layer, and a tunnel oxide layer, and the tunnel oxide layer is located between the gate layer and the semiconductor layer. The tunnel oxide layer includes a central area and a peripheral area. A ratio of a minimum thickness of the peripheral area of the tunnel oxide layer to a maximum thickness of the central area of the tunnel oxide layer is defined as the corner ratio.

In order to make the aforementioned features and advantages of the disclosure comprehensible, embodiments accompanied with drawings are described in detail as follows.

### BRIEF DESCRIPTION OF THE DRAWINGS

FIG. 1 shows a schematic diagram of a PUF code generating apparatus according to an embodiment of the disclosure.
FIGS. 2A, 2B, and 2C respectively show PUF codes according to embodiments of the disclosure.
FIG. 3 shows a schematic diagram of the structure of a first memory cell according to an embodiment of the disclosure.
FIGS. 4A and 4B show a flowchart of steps of fabricating the tunnel oxide layer of the first memory cell through a first process according to an embodiment of the disclosure.
FIGS. 5A and 5B show a flowchart of steps of fabricating the tunnel oxide layer of the first memory cell through a second process according to an embodiment of the disclosure.
FIG. 6 shows a flowchart of steps of fabricating the tunnel oxide layer of the first memory cell through a third process according to an embodiment of the disclosure.
FIG. 7 shows a flowchart of a PUF code generating method according to an embodiment of the disclosure.

### DESCRIPTION OF THE EMBODIMENTS

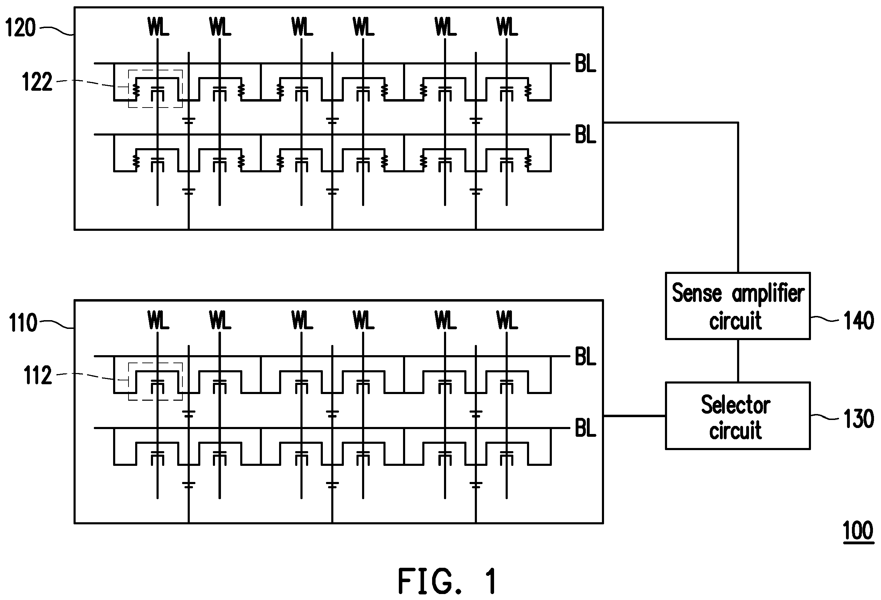

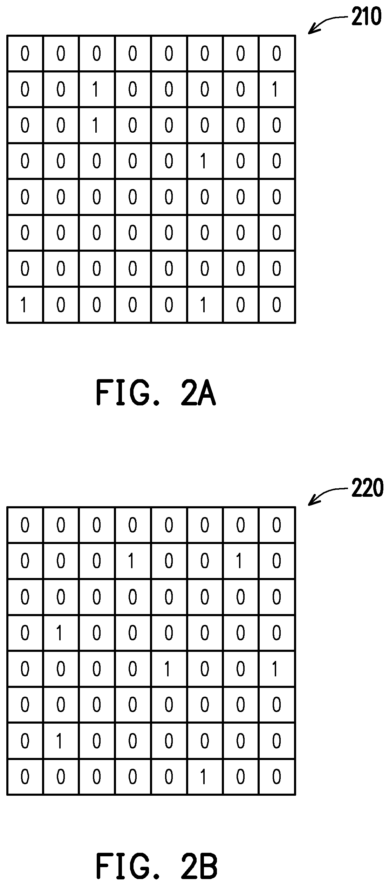

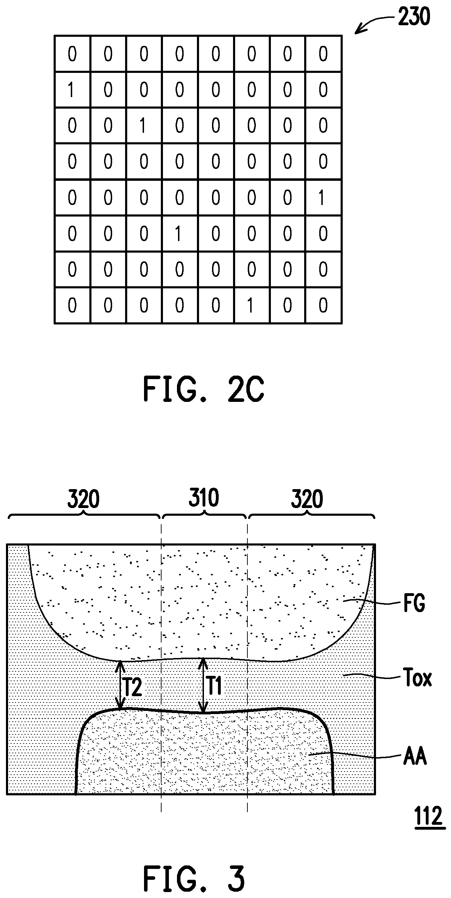

Referring to FIG. 1, a physical unclonable function (PUF) code generating apparatus 100 of an embodiment of the disclosure includes a PUF code generating element 110 and a PUF code storage element 120. The PUF code storage element 120 may be coupled to the PUF code generating element 110 through a selector circuit 130 and a sense amplifier circuit 140. The selector circuit 130 may be implemented by a column multiplexor connected to bit lines BL. The sense amplifier circuit 140 may further include decoders for addressing the corresponding PUF code storage element 120 which will store the selected PUF code. The PUF code generating element 110 is configured to generate PUF codes 210, 220, and 230 as shown in FIGS. 2A, 2B, and 2C. The PUF code storage element 120 is configured to receive and store the PUF codes 210, 220, and 230. It should be noted that the PUF codes 210, 220, and 230 shown in FIGS. 2A, 2B, and 2C are merely for illustrative purposes and are not intended to limit the disclosure.

The PUF code generating element 110 includes multiple first memory cells 112 arranged in an array. The first memory cells 112 are coupled to respective bit lines BL and word lines WL thereof. The first memory cells 112 are, for example, NOR flash memory cells. The PUF code storage element 120 includes multiple second memory cells 122 arranged in an array. The second memory cells 122 are coupled to respective bit lines BL and word lines WL thereof. The second memory cells 122 are, for example, resistive random access memory (RRAM) cells, but the disclosure is not limited thereto. The second memory cells 122 may be non-volatile memory cells different from the first memory cells 112.

In the embodiment, the PUF code generating element 110 may be programmed as a first logic value "0", and through a data retention loss process, a part of bits of the PUF code generating element 110 is made randomly change to a second logic value "1" to generate the PUF code 210, 220, or 230. The data retention loss process refers to the process of placing the PUF code generating element 110 in an ambient temperature environment and making the bit data of the PUF code generating element 110 randomly change, thereby generating the PUF code. In one embodiment, to increase the randomness of the PUF codes and improving the efficiency of generating the PUF codes, after the data retention loss process, there is no screen process to screen out an unstable bit. In FIGS. 2A, 2B, and 2C, a part of bits of the memory array originally programmed as the logic value "0" randomly changes to the logic value "1" to generate the PUF codes. By using the NOR flash memory provided in the embodiment of the disclosure, which has the characteristic of bit data that randomly changes, the embodiment of the disclosure may generate the PUF code, which may serve as a cryptographic key to increase the security of a system device.

Referring to FIG. 3, the first memory cell 112 includes a floating gate layer FG, a semiconductor layer AA, and a tunnel oxide layer Tox. The tunnel oxide layer Tox is located between the floating gate layer FG and the semiconductor layer AA. The tunnel oxide layer Tox includes a central area 310 and a peripheral area 320. A ratio T2/T1 of a minimum thickness T2 of the peripheral area 320 to a maximum thickness T1 of the central area 310 is defined as a corner ratio C. The maximum thickness T1 of the central area 310 is greater than the minimum thickness T2 of the peripheral area 320, and the corner ratio C is less than 0.99.

The following describes an embodiment of the disclosure in which the use of different process methods may fabricate the tunnel oxide layer Tox of the PUF code generating element and make the corner ratio C of the first memory cell 112 less than 0.99. Moreover, the various embodiments may be appropriately combined.

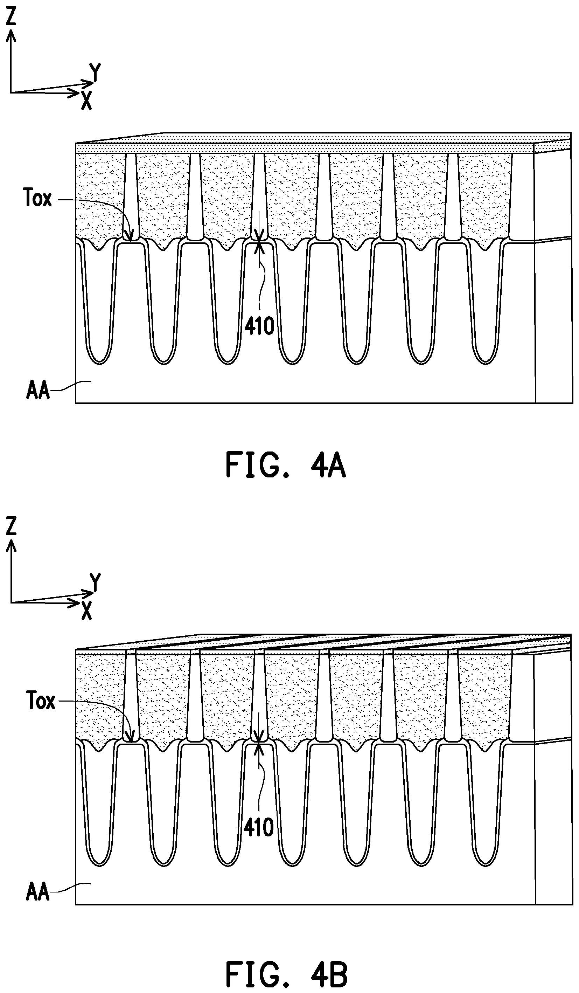

FIGS. 4A and 4B show a flowchart of steps of fabricating the tunnel oxide layer of the first memory cell through a first process according to an embodiment of the disclosure. The tunnel oxide layer fabricated through the first process may make the corner ratio of the first memory cell less than 0.99.

Please refer to FIGS. 4A and 4B. In FIG. 4A, an annealing step is performed on the semiconductor layer AA by introducing an excess amount of oxygen, so as to form the tunnel oxide layer Tox of a first thickness 410 on the semiconductor layer AA. Next, in FIG. 4B, the tunnel oxide layer Tox of the first thickness 410 is planarized to form the tunnel oxide layer Tox of a second thickness 420 on the semiconductor layer AA. The tunnel oxide layer Tox of the second thickness 420 may make the corner ratio C less than 0.99. The tunnel oxide layer of the second thickness is between 140 angstroms (Å) and 240 Å.

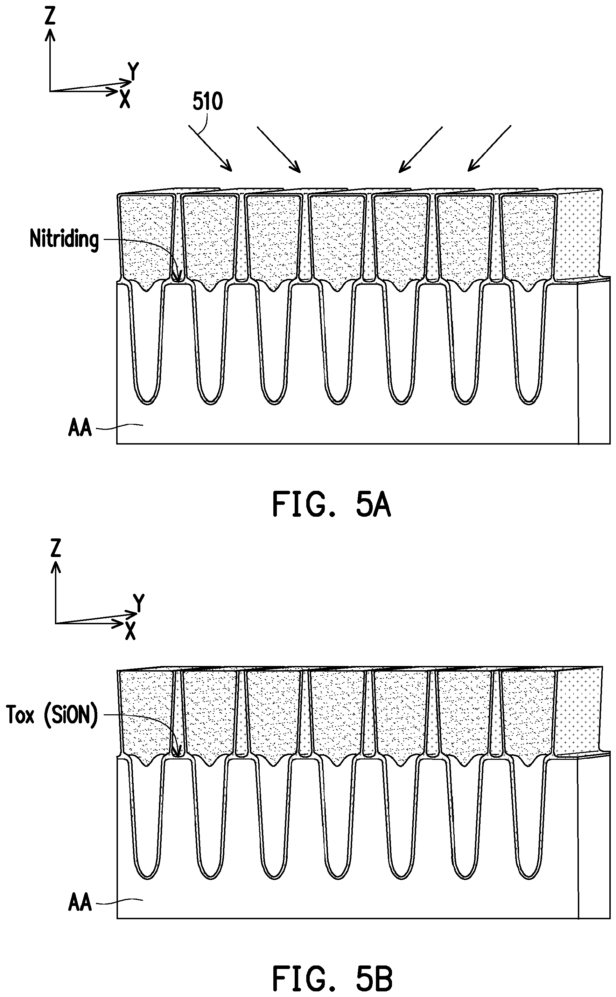

FIGS. 5A and 5B show a flowchart of steps of fabricating the tunnel oxide layer of the first memory cell through a second process according to an embodiment of the disclosure. The tunnel oxide layer fabricated by the second process may make the corner ratio of the first memory cell less than 0.99.

Please refer to FIGS. 5A and 5B. In FIG. 5A, ion implantation 510 is performed on the semiconductor layer AA and a silicon nitride layer is formed. Next, in FIG. 5B, a part of the silicon nitride layer is removed, and an annealing step is performed on the semiconductor layer AA to form the tunnel oxide layer Tox (such as silicon oxynitride (SiON)) on the semiconductor layer AA so that the corner ratio C is less than 0.99. In the step of the ion implantation 510 in FIG. 5A, nitrogen atoms may change the oxidation rate of the semiconductor layer in the annealing step so that the thickness of the formed tunnel oxide layer Tox has the characteristic of the corner ratio C less than 0.99.

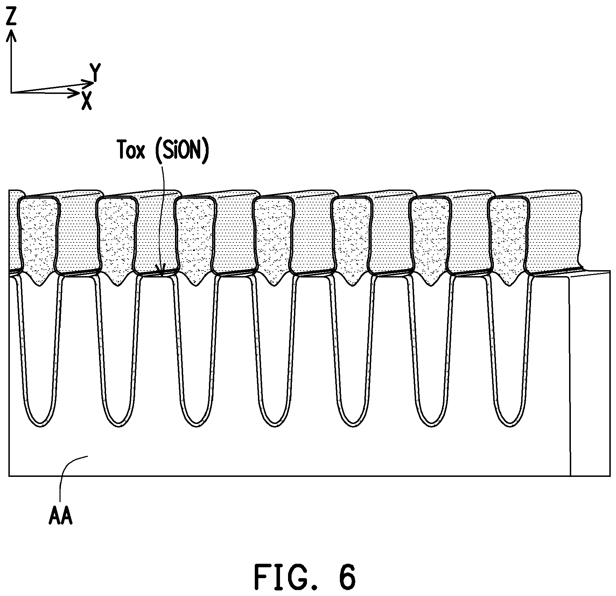

FIG. 6 shows a flowchart of steps of fabricating the tunnel oxide layer of the first memory cell through a third process according to an embodiment of the disclosure. The tunnel oxide layer fabricated by the third process may make the corner ratio of the first memory cell less than 0.99. Referring to FIG. 6, in the embodiment, for example, the tunnel oxide layer Tox of a thickness less than 95 Å is directly formed on the semiconductor layer AA so that the thickness of the tunnel oxide layer Tox may make the corner ratio C less than 0.99.

Fabricating the tunnel oxide layer Tox of the first memory cell 112 in the PUF code generating device 110 through at least one of the first process, the second process, or the third process described above may make the corner ratio C of the first memory cell 112 in the PUF code generating device 110 less than 0.99.

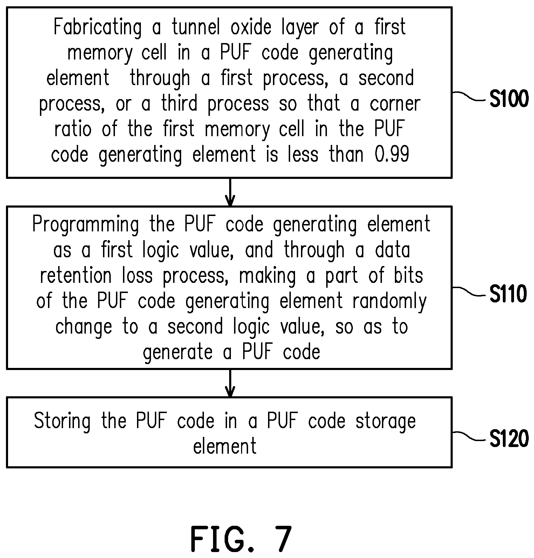

FIG. 7 shows a flowchart of a PUF code generating method according to an embodiment of the disclosure. Referring to FIGS. 1 and 7, the PUF code generating method in the embodiment may be applied to at least the PUF code generating apparatus 100 in the embodiment of FIG. 1, but the disclosure is not limited thereto. In step S100, the tunnel oxide layer Tox of the first memory cell 112 in the PUF code generating element 110 is fabricated through the first process, the second process, or the third process so that the corner ratio C of the first memory cell 112 in the PUF code generating element 110 is less than 0.99. In step S110, the PUF code generating element 110 is programmed as a first logic value "0", and through a data retention loss process, a part of bits of the PUF code generating element 110 randomly changes to a second logic value "1" to generate the PUF code 210, 220, or 230. In step S120, the PUF code 210, 220, or 230 is stored in the PUF code storage element 120 to serve as a cryptographic key, which increases the security of a system device.

In summary, in the embodiment of the disclosure, the PUF code generating element includes NOR flash memory. After the NOR flash memory fabricated according to the disclosure is programmed, a part of bits randomly changes through the data retention loss process to generate the PUF code. The PUF code generating element utilizes the characteristic of bit data that randomly changes of the NOR flash memory fabricated by the disclosure to generate the PUF code. Based on the random and unique characteristics of the PUF-generated random code, the random code may serve as a cryptographic key, which increases the security of the system device.

The present invention is suitable for making a miniaturized PUF code generating apparatus, so as to increase the total number of dies on a wafer. Therefore, the production cost and energy consumption of manufacturing a single IC are reduced, and the production energy consumption of subsequent packaging is also reduced, thereby reducing carbon emissions in the process of producing a PUF code generating apparatus. Besides, by the present invention, power consumption of generation of PUF code is reduced, and process of manufacturing a PUF code generating apparatus is simplified. The present invention provides a sustainable PUF code generating apparatus.

Although the disclosure has been described with reference to the above embodiments, the described embodiments are not intended to limit the disclosure. People of ordinary skill in the art may make some changes and modifications without departing from the scope of the disclosure. Thus, the scope of the disclosure shall be subject to those defined by the attached claims.

## Claims

1. A physical unclonable function (PUF) code generating apparatus (100), comprising:
a PUF code generating element (110), configured to generate a PUF code (210, 220, 230); and
a PUF code storage element (120), coupled to the PUF code generating element (110), and configured to receive and store the PUF code (210, 220, 230),
wherein the PUF code generating element (110) comprises a plurality of first memory cells (112), and each of the first memory cells (112) comprises a floating gate layer (FG), a semiconductor layer (AA), and a tunnel oxide layer (Tox), the tunnel oxide layer (Tox) is located between the floating gate layer (FG) and the semiconductor layer (AA), the tunnel oxide layer (Tox) comprises a central area (310) and a peripheral area (320), a ratio (T2/T1) of a minimum thickness (T2) of the peripheral area (320) of the tunnel oxide layer (Tox) to a maximum thickness T1 of the central area (310) of the tunnel oxide layer (Tox) is defined as a corner ratio (C), and the corner ratio (C) is less than 0.99.

2. The PUF code generating apparatus (100) according to claim 1, wherein the first memory cells (112) are NOR flash memory cells.

3. The PUF code generating apparatus (100) according to claim 1, wherein the tunnel oxide layer (Tox) of the first memory cell (112) is fabricated through a first process so that the corner ratio (C) is less than 0.99, and the first process comprises:
performing an annealing step on the semiconductor layer (AA) to form the tunnel oxide layer (Tox) of a first thickness (410) on the semiconductor layer (AA); and
planarizing the tunnel oxide layer (Tox) to form the tunnel oxide layer (Tox) of a second thickness (420) on the semiconductor layer (AA), wherein the tunnel oxide layer (Tox) of the second thickness (420) makes the corner ratio (C) less than 0.99.

4. The PUF code generating apparatus (100) according to claim 1, wherein the tunnel oxide layer (Tox) of the first memory cell (112) is fabricated through a second process so that the corner ratio (C) is less than 0.99, and the second process comprises:
performing ion implantation (510) on the semiconductor layer (AA), and forming a silicon nitride layer;
removing a part of the silicon nitride layer; and
performing an annealing step on the semiconductor layer (AA) to form the tunnel oxide layer (Tox) on the semiconductor layer (AA) and make the corner ratio (C) less than 0.99.

5. The PUF code generating apparatus (100) according to claim 1, wherein the tunnel oxide layer (Tox) of the first memory cell (112) is fabricated through a third process so that the corner ratio (C) is less than 0.99, and the third process comprises:
forming the tunnel oxide layer (Tox) of a thickness less than 95 angstroms on the semiconductor layer (AA).

6. The PUF code generating apparatus (100) according to claim 1, wherein the PUF code generating element (110) is programmed as a first logic value, and through a data retention loss process, a part of bits of the PUF code generating element (110) randomly changes to a second logic value to generate the PUF code (210, 220, 230).

7. The PUF code generating apparatus (100) according to claim 1, further including:
a selector circuit (130), coupled to the PUF code generating element (110); and
a sense amplifier circuit (140), coupled between the selector circuit (130) and the PUF code storage element (120).

8. PUF code generating apparatus (100) according to claim 7, further including:
a plurality of decoders for addressing a corresponding memory cell in the PUF code storage element (120) which will store a selected PUF code.

9. A physical unclonable function (PUF) code generating method, configured for a PUF code generating apparatus (100), wherein the PUF code generating apparatus (100) comprises a PUF code generating element (110) and a PUF code storage element (120), the PUF code generating method comprising:
fabricating a tunnel oxide layer (Tox) of a plurality of first memory cells (112) in the PUF code generating element (110) through a first process, a second process, or a third process so that a corner ratio (C) of the first memory cells (112) in the PUF code generating element (110) is less than 0.99.
programming the PUF code generating element (110) as a first logic value, and through a data retention loss process, making a part of bits of the PUF code generating element (110) randomly change to a second logic value, so as to generate a PUF code (210, 220, 230); and
storing the PUF code (210, 220, 230) in the PUF code storage element (120),
wherein each of the first memory cells (112) comprises a gate layer, a semiconductor layer (AA), and a tunnel oxide layer (Tox), the tunnel oxide layer (Tox) is located between the gate layer and the semiconductor layer (AA), the tunnel oxide layer (Tox) comprises a central area (310) and a peripheral area (320), and a ratio (T2/T1) of a minimum thickness (T2) of the peripheral area (320) of the tunnel oxide layer (Tox) to a maximum thickness (T1) of the central area (310) of the tunnel oxide layer (Tox) is defined as the corner ratio (C).

10. The PUF code generating method according to claim 9, wherein the first process comprises:
performing an annealing step on the semiconductor layer (AA) to form the tunnel oxide layer (Tox) of a first thickness (410) on the semiconductor layer (AA); and
planarizing the tunnel oxide layer (Tox) to form the tunnel oxide layer (Tox) of a second thickness (420) on the semiconductor layer (AA), wherein the tunnel oxide layer (Tox) of the second thickness (420) makes the corner ratio (C) less than 0.99.

11. The PUF code generating method according to claim 10, wherein the second thickness (420) of the tunnel oxide layer (Tox) is between 140 angstroms (Å) and 240 Å.

12. The PUF code generating method according to claim 9, wherein the second process comprises:
performing ion implantation (510) on the semiconductor layer (AA), and forming a silicon nitride layer;
removing a part of the silicon nitride layer; and
performing an annealing step on the semiconductor layer (AA) to form the tunnel oxide layer (Tox) on the semiconductor layer (AA) so that the corner ratio (C) is less than 0.99.

13. The PUF code generating method according to claim 9, wherein the third process comprises:
forming the tunnel oxide layer (Tox) of a thickness less than 95 angstroms on the semiconductor layer (AA).

14. The PUF code generating method according to claim 9, wherein the data retention loss process includes placing the PUF code generating element (110) in an ambient temperature environment.

15. The PUF code generating method according to claim 9, wherein after the data retention loss process, there is no screen process to screen out an unstable bit.

## Patentansprüche

1. Physikalisches unklonbares Funktionscode (PUF) Erzeugungsgerät (100), umfassend:
ein PUF Code Erzeugungselement (110), konfiguriert, einen PUF Code (210, 220, 230) zu erzeugen; und
ein PUF Code Speicherelement (120), gekoppelt mit dem PUF Code Erzeugungselement (110) und konfiguriert, den PUF Code (210, 220, 230) zu empfangen und zu speichern,
wobei das PUF Code Erzeugungselement (110) eine Vielzahl von ersten Speicherzellen (112) umfasst und jede der ersten Speicherzellen (112) eine Floating Gate Schicht (FG), eine Halbleiter Schicht (AA) und eine Tunnel Oxid Schicht (Tox) umfasst, wobei sich die Tunnel Oxid Schicht (Tox) zwischen der Floating Gate Schicht (FG) und der Halbleiter Schicht (AA) befindet, die Tunnel Oxid Schicht (Tox) einen Zentralbereich (310) und einen Randbereich (320) umfasst, ein Verhältnis (T2/T1) aus einer Minimaldicke (T2) des Randbereichs (320) der Tunnel Oxid Schicht (Tox) zu einer Maximaldicke (T1) des Zentralbereichs (310) der Tunnel Oxid Schicht (Tox) als ein Eckenverhältnis (C) definiert ist, und das Eckenverhältnis (C) kleiner als 0,99 ist.

2. PUF Code Erzeugungsgerät (100) nach Anspruch 1, wobei die ersten Speicherzellen (112) NOR Flash Speicherzellen sind.

3. PUF Code Erzeugungsgerät (100) nach Anspruch 1, wobei die Tunnel Oxid Schicht (Tox) der ersten Speicherzelle (112) durch einen ersten Prozess hergestellt wird, so dass das Eckenverhältnis (C) kleiner als 0,99 ist, und wobei der erste Prozess umfasst:
Durchführen eines Tempern-Schritts an der Halbleiter Schicht (AA), um die Tunnel Oxid Schicht (Tox) mit einer ersten Dicke (410) auf der Halbleiter Schicht (AA) zu bilden; und
Planarisieren der Tunnel Oxid Schicht (Tox), um die Tunnel Oxid Schicht (Tox) mit einer zweiten Dicke (420) auf der Halbleiter Schicht (AA) zu bilden, wobei die Tunnel Oxid Schicht (Tox) mit der zweiten Dicke (420) das Eckenverhältnis (C) kleiner als 0,99 macht.

4. PUF Code Erzeugungsgerät (100) nach Anspruch 1, wobei die Tunnel Oxid Schicht (Tox) der ersten Speicherzelle (112) durch einen zweiten Prozess hergestellt wird, so dass das Eckenverhältnis (C) kleiner als 0,99 ist, und wobei der zweite Prozess umfasst:
Durchführen einer Ionenimplantation (510) an der Halbleiter Schicht (AA) und Bilden einer Siliziumnitrid Schicht;
Entfernen eines Teils der Siliziumnitrid Schicht; und
Durchführen eines Tempern-Schritts an der Halbleiter Schicht (AA), um die Tunnel Oxid Schicht (Tox) auf der Halbleiter Schicht (AA) zu bilden und das Eckenverhältnis (C) kleiner als 0,99 zu machen.

5. PUF Code Erzeugungsgerät (100) nach Anspruch 1, wobei die Tunnel Oxid Schicht (Tox) der ersten Speicherzelle (112) durch einen dritten Prozess hergestellt wird, so dass das Eckenverhältnis (C) kleiner als 0,99 ist, und wobei der dritte Prozess umfasst:
Bilden der Tunnel Oxid Schicht (Tox) mit einer Dicke von weniger als 95 Ångström auf der Halbleiter Schicht (AA).

6. PUF Code Erzeugungsgerät (100) nach Anspruch 1, wobei das PUF Code Erzeugungselement (110) als ein erster Logikwert programmiert ist und durch einen Datenhalteverlust-Prozess ein Teil der Bits des PUF Code Erzeugungselements (110) zufällig zu einem zweiten Logikwert wechselt, um den PUF Code (210, 220, 230) zu erzeugen.

7. PUF Code Erzeugungsgerät (100) nach Anspruch 1, ferner umfassend:
eine Selektorschaltung (130), gekoppelt mit dem PUF Code Erzeugungselement (110); und
eine Leseverstärkerschaltung (140), gekoppelt zwischen der Selektorschaltung (130) und dem PUF Code Speicherelement (120).

8. PUF Code Erzeugungsgerät (100) nach Anspruch 7, ferner umfassend:
eine Vielzahl von Decodern zum Adressieren einer entsprechenden Speicherzelle in dem PUF Code Speicherelement (120), welche einen ausgewählten PUF Code speichern wird.

9. Verfahren zur Erzeugung eines physikalischen unklonbaren Funktionscodes (PUF), konfiguriert für ein PUF Code Erzeugungsgerät (100), wobei das PUF Code Erzeugungsgerät (100) ein PUF Code Erzeugungselement (110) und ein PUF Code Speicherelement (120) umfasst, wobei das PUF Code Erzeugungsverfahren umfasst:
Herstellen einer Tunnel Oxid Schicht (Tox) einer Vielzahl von ersten Speicherzellen (112) in dem PUF Code Erzeugungselement (110) durch einen ersten Prozess, einen zweiten Prozess oder einen dritten Prozess, so dass ein Eckenverhältnis (C) der ersten Speicherzellen (112) in dem PUF Code Erzeugungselement (110) kleiner als 0,99 ist,
Programmieren des PUF Code Erzeugungselements (110) als erster Logikwert und, durch einen Datenhalteverlust-Prozess, Veranlassen, dass ein Teil der Bits des PUF Code Erzeugungselements (110) zufällig zu einem zweiten Logikwert wechselt, um so einen PUF Code (210, 220, 230) zu erzeugen; und
Speichern des PUF Codes (210, 220, 230) in dem PUF Code Speicherelement (120),
wobei jede der ersten Speicherzellen (112) eine Gate Schicht, eine Halbleiter Schicht (AA) und eine Tunnel Oxid Schicht (Tox) umfasst, wobei sich die Tunnel Oxid Schicht (Tox) zwischen der Gate Schicht und der Halbleiter Schicht (AA) befindet, die Tunnel Oxid Schicht (Tox) einen Zentralbereich (310) und einen Randbereich (320) umfasst, und ein Verhältnis (T2/T1) einer Minimaldicke (T2) des Randbereichs (320) der Tunnel Oxid Schicht (Tox) zu einer Maximaldicke (T1) des Zentralbereichs (310) der Tunnel Oxid Schicht (Tox) als das Eckenverhältnis (C) definiert ist.

10. PUF Code Erzeugungsverfahren nach Anspruch 9, wobei der erste Prozess umfasst:
Durchführen eines Tempern-Schritts an der Halbleiter Schicht (AA), um die Tunnel Oxid Schicht (Tox) mit einer ersten Dicke (410) auf der Halbleiter Schicht (AA) zu bilden; und
Planarisieren der Tunnel Oxid Schicht (Tox), um die Tunnel Oxid Schicht (Tox) mit einer zweiten Dicke (420) auf der Halbleiter Schicht (AA) zu bilden, wobei die Tunnel Oxid Schicht (Tox) mit der zweiten Dicke (420) das Eckenverhältnis (C) kleiner als 0,99 macht.

11. PUF Code Erzeugungsverfahren nach Anspruch 10, wobei die zweite Dicke (420) der Tunnel Oxid Schicht (Tox) zwischen 140 Ångström (Å) und 240 Å liegt.

12. PUF Code Erzeugungsverfahren nach Anspruch 9, wobei der zweite Prozess umfasst:
Durchführen einer Ionenimplantation (510) an der Halbleiter Schicht (AA) und Bilden einer Siliziumnitrid Schicht;
Entfernen eines Teils der Siliziumnitrid Schicht; und
Durchführen eines Tempern-Schritts an der Halbleiter Schicht (AA), um die Tunnel Oxid Schicht (Tox) auf der Halbleiter Schicht (AA) zu bilden, so dass das Eckenverhältnis (C) kleiner als 0,99 ist.

13. PUF Code Erzeugungsverfahren nach Anspruch 9, wobei der dritte Prozess umfasst:
Bilden der Tunnel Oxid Schicht (Tox) mit einer Dicke von weniger als 95 Ångström auf der Halbleiter Schicht (AA).

14. PUF Code Erzeugungsverfahren nach Anspruch 9, wobei der Datenhalteverlust-Prozess Anordnen des PUF Code Erzeugungselements (110) in einer Umgebung bei Umgebungstemperatur umfasst.

15. PUF Code Erzeugungsverfahren nach Anspruch 9, wobei nach dem Datenhalteverlust-Prozess kein Sortierprozess durchgeführt wird, um ein instabiles Bit auszusortieren.

## Revendications

1. Appareil de génération de code de fonction physique inclonable (PUF) (100),
comprenant:
un élément de génération de code PUF (110), configuré pour générer un code PUF (210, 220, 230) ; et
un élément de stockage de code PUF (120), couplé à l'élément générateur de code PUF (110), et configuré pour recevoir et stocker le code PUF (210, 220, 230),dans lequel l'élément générateur de code PUF (110) comprend une pluralité de premières cellules de mémoire (112), et chacune des premières cellules de mémoire (112) comprend une couche de grille flottante (FG), une couche semi-conductrice (AA) et une couche d'oxyde tunnel (Tox), la couche d'oxyde tunnel (Tox) étant située entre la couche de grille flottante (FG) et la couche semi-conductrice (AA), la couche d'oxyde tunnel (Tox) comprenant une zone centrale (310) et une zone périphérique (320), un rapport (T2/T1) entre une épaisseur minimale (T2) de la zone périphérique (320) de la couche d'oxyde tunnel (Tox) et une épaisseur maximale T1 de la zone centrale (310) de la couche d'oxyde tunnel (Tox) est défini comme un rapport d'angle (C), et le rapport d'angle (C) est inférieur à 0,99.

2. Appareil de génération de code PUF (100) selon la revendication 1, dans lequel les premières cellules de mémoire (112) sont des cellules de mémoire flash NOR.

3. Appareil de génération de code PUF (100) selon la revendication 1, dans lequel la couche d'oxyde tunnel (Tox) de la première cellule de mémoire (112) est fabriquée par un premier processus de sorte que le rapport d'angle (C) soit inférieur à 0,99, et le premier processus comprend:
la réalisation d'une étape de recuit sur la couche semi-conductrice (AA) afin de former la couche d'oxyde tunnel (Tox) d'une première épaisseur (410) sur la couche semi-conductrice (AA) ; etplanariser la couche d'oxyde tunnel (Tox) pour former la couche d'oxyde tunnel (Tox) d'une deuxième épaisseur (420) sur la couche semi-conductrice (AA), dans lequel la couche d'oxyde tunnel (Tox) de la deuxième épaisseur (420) rend le rapport d'angle (C) inférieur à 0,99.

4. Appareil de génération de code PUF (100) selon la revendication 1, dans lequel la couche d'oxyde tunnel (Tox) de la première cellule mémoire (112) est fabriquée par un deuxième processus de sorte que le rapport d'angle (C) soit inférieur à 0,99, et le deuxième processus comprend: la réalisation d'une implantation ionique (510) sur la couche semi-conductrice (AA) et la formation d'une couche de nitrure de silicium; retirer une partie de la couche de nitrure de silicium; et
effectuer une étape de recuit sur la couche semi-conductrice (AA) pour former la couche d'oxyde tunnel (Tox) sur la couche semi-conductrice (AA) et rendre le rapport d'angle (C) inférieur à 0,99.

5. Appareil de génération de code PUF (100) selon la revendication 1, dans lequel la couche d'oxyde tunnel (Tox) de la première cellule mémoire (112) est fabriquée par un troisième processus de manière à ce que le rapport d'angle (C) soit inférieur à 0,99, et le troisième processus comprend:
la formation de la couche d'oxyde tunnel (Tox) d'une épaisseur inférieure à 95 angströms sur la couche semi-conductrice (AA).

6. Appareil de génération de code PUF (100) selon la revendication 1, dans lequel l'élément de génération de code PUF (110) est programmé comme une première valeur logique, et par un processus de perte de rétention de données, une partie des bits de l'élément de génération de code PUF (110) change aléatoirement en une deuxième valeur logique pour générer le code PUF (210, 220, 230).

7. Appareil de génération de code PUF (100) selon la revendication 1, comprenant en outre :un circuit sélecteur (130), couplé à l'élément de génération de code PUF (110);
un circuit amplificateur de détection (140), couplé entre le circuit sélecteur (130) et l'élément de stockage de code PUF (120).

8. Appareil de génération de code PUF (100) selon la revendication 7, comprenant en outre: une pluralité de décodeurs pour adresser une cellule de mémoire correspondante dans l'élément de stockage de code PUF (120) qui stockera un code PUF sélectionné.

9. Procédé de génération de code PUF (fonction physique non clonable), configuré pour un appareil de génération de code PUF (100), dans lequel l'appareil de génération de code PUF (100) comprend un élément de génération de code PUF (110) et un élément de stockage de code PUF (120), le procédé de génération de code PUF comprenant:
la fabrication d'une couche d'oxyde tunnel (Tox) d'une pluralité de premières cellules mémoire (112) dans l'élément de génération de code PUF (110) par un premier processus, un deuxième processus ou un troisième processus de sorte qu'un rapport d'angle (C) des premières cellules mémoire (112) dans l'élément de génération de code PUF (110) soit inférieur à 0,99
programmer l'élément générateur de code PUF (110) comme une première valeur logique, et par le biais d'un processus de perte de rétention de données, faire en sorte qu'une partie des bits de l'élément générateur de code PUF (110) passe aléatoirement à une deuxième valeur logique, de manière à générer un code PUF (210, 220, 230); et stocker le code PUF (210, 220, 230) dans l'élément de stockage de code PUF (120),dans lequel chacune des premières cellules de mémoire (112) comprend une couche de grille, une couche semi-conductrice (AA) et une couche d'oxyde tunnel (Tox), la couche d'oxyde tunnel (Tox) est située entre la couche de grille et la couche semi-conductrice (AA), la couche d'oxyde tunnel (Tox) comprend une zone centrale (310) et une zone périphérique (320), et un rapport (T2/T1) entre une épaisseur minimale (T2) de la zone périphérique (320) de la couche d'oxyde tunnel (Tox) et une épaisseur maximale (T1) de la zone centrale (310) de la couche d'oxyde tunnel (Tox) est défini comme le rapport d'angle (C).

10. Procédé de génération de code PUF selon la revendication 9, dans lequel le premier processus comprend:
la réalisation d'une étape de recuit sur la couche semi-conductrice (AA) afin de former la couche d'oxyde tunnel (Tox) d'une première épaisseur (410) sur la couche semi-conductrice (AA) ; et à planer la couche d'oxyde tunnel (Tox) pour former la couche d'oxyde tunnel (Tox) d'une deuxième épaisseur (420) sur la couche semi-conductrice (AA), dans lequel la couche d'oxyde tunnel (Tox) de la deuxième épaisseur (420) rend le rapport d'angle (C) inférieur à 0,99.

11. Procédé de génération de code PUF selon la revendication 10, dans lequel la deuxième épaisseur (420) de la couche d'oxyde tunnel (Tox) est comprise entre 140 angströms (Å) et 240 Å.

12. Procédé de génération de code PUF selon la revendication 9, dans lequel le deuxième processus comprend: réaliser une implantation ionique (510) sur la couche semi-conductrice (AA) et former une couche de nitrure de silicium;
retirer une partie de la couche de nitrure de silicium; et
réaliser une étape de recuit sur la couche semi-conductrice (AA) afin de former la couche d'oxyde tunnel (Tox) sur la couche semi-conductrice (AA) de manière à ce que le rapport d'angle (C) soit inférieur à 0,99.

13. Procédé de génération de code PUF selon la revendication 9, dans lequel le troisième processus comprend:
la formation de la couche d'oxyde tunnel (Tox) d'une épaisseur inférieure à 95 angströms sur la couche semi-conductrice (AA).

14. Procédé de génération de code PUF selon la revendication 9, dans lequel le processus de perte de rétention des données comprend le placement de l'élément de génération de code PUF (110) dans un environnement à température ambiante.

15. Procédé de génération de code PUF selon la revendication 9, dans lequel, après le processus de perte de rétention des données, il n'y a pas de processus de filtrage pour filtrer un bit instable.
